# EUROPEAN PATENT SPECIFICATION

(11) **EP 0 676 453 B1**
(45) Date of publication and mention of the grant of the patent: **29.12.1997**
(21) Application number: 95200824.1
(22) Date of filing: 31.03.1995
(51) Int. Cl.: C09D 7/12, C09D 115/02

(54) **Use of lactates in the preparation of reversible coating compositions**
Verwendung von Lactaten bei der Herstellung von reversiblen Überzugsmitteln
Utilisation de lactates dans la préparation de compositions de revêtement réversibles

(30) Priority: 31.03.1994 NL 9400513
(43) Date of publication of application: 11.10.1995
(73) Proprietor: BICHEMIE COATINGS B.V., NL-1303 AC Almere (NL)
(72) Inventor: Lourens, Giovanni Fransisco Rossini, NL-1338 XM Almere (NL); Bakker, Hendrik Roelof, NL-1531 PK Wormer (NL); Kranz, Michel Theodorus Christianus, NL-2274 GX Voorburg (NL)
(74) Representative: de Bruijn, Leendert C.

(56) References cited:
- WO-A-93/24578
- CHEMICAL ABSTRACTS, vol. 77, no. 7, 14 August 1972, Columbus, Ohio, US; abstract no. 48021, 'Monocarboxylic acids esters as atmospheric corrosion inhibitors.'

## Description

The present invention relates to the use of lactates in reversible coating compositions.

Reversible coating compositions are coating compositions, a new top layer (top coat) of which, when applied, fuses with a top layer already present. As a result of this, during periodic maintenance, substrates can always be recoated without the substrate having to be pre-treated, e.g. the already present layer having to be removed.

In reversible coating compositions such as, for example, chlorinated rubber paints, it is known to use as solvent volatile aromatic solvents such as toluene, xylene and mixtures of higher-boiling aromatic solvents, and mixtures of volatile esters and ketones and aliphatic solvents.

These solvents dissolve the constituents of the coating composition well and, as a result of their volatile nature, result in a good and rapid drying of the top layer applied. However, the use of these volatile organic solvents, which evaporate from the applied coating composition during drying, entails appreciable disadvantages from an environmental point of view, such as damage to the ozone layer.

For this reason, the various national governments and supra-national bodies are imposing more and more limitations on the use of such volatile organic substances (VOS compounds), and it is the intention in the future to reduce the emission of said VOS compounds (which are defined in a large number of countries as liquids having a vapour pressure of more than 0.1 mm Hg (0.133 mbar or 13.3 Pa) at 20°C) by more than 70 - 80%.

The paint industry is therefore looking for ways of further reducing the use of said VOS compounds in coating compositions.

A possible solution to this problem is to replace the volatile organic solvents by solvents or combinations of solvents, some of which do not belong to the VOS compounds and/or which furthermore also inflict little or no damage on the environment, that is to say solvents having a low ozone-forming potential.

Said solvents must, however, be adequate from a painting point of view.

This means, inter alia, that said solvents must dissolve the constituents of the coating compositions well, that the coating compositions must be stable when stored in the tin, that the reversibility of the coating composition must be maintained, that the compositions must exhibit a good and rapid drying, and that the top layer finally obtained must have the desired properties.

In this connection, a good and rapid drying of the composition, in particular, is of importance because the boiling point and the vapour pressure of the solvent used have a considerable influence on the drying and the final properties of the top layer applied, less volatile solvents resulting in a paint which dries more slowly.

The choice of the solvent is important, in particular, in the case of the chlorinated rubber paints, and especially the so-called "high-build" chlorinated rubber paints, chlorinated rubber paint compositions which are applied to the substrate with a thickness of the wet paint layer of 150 - 200 micrometres, often by "airless or brush" means.

Such chlorinated rubber paints are used for outdoor applications, inter alia for protection against oxidation (such as corrosion protection in the case of electricity pylons) and the protection of concrete (in swimming pools and the like), applications for which they are eminently suitable because of their good water resistance.

The "high-build" chlorinated rubber paints contain, in addition to the powdered chlorinated rubber polymers and the necessary plasticizers, also means for regulating the rheological properties, such as hydrogenated and modified castor-oil derivatives, which provide said compositions with structural viscosity.

The paint properties of said chlorinated rubber paints are strongly dependent on the solvent used, with the result that the choice and the matching of the solvents used is particularly critical for these coatings.

Aliphatic solvents and hydroxylic solvents, such as monohydric and polyhydric alcohols are generally unsuitable because they dissolve the constituents of the paint poorly and result in reaction of the coating composition with the tin or because they cause the paint layer to swell (see, inter alia, H. Kittel, Lehrbuch der Lacke und Beschichtungen (Textbook of paints and coatings), Volume I, Part 1, W. A. Colomb Verlag, page 262). Furthermore, the reversibility of the coating is impaired if aqueous or two-phase systems are used.

According to the prior art, the best solvents are the volatile aromatic hydrocarbons (see C. G. Reid: "Chlorinated rubber: the solution to many corrosion problems", Anti-corrosion 1975, pages 8 - 13). Said aromatic solvents, however, belong to the VOS compounds.

The object of the present invention is therefore to provide a reversible coating composition which has a lower VOS emission and which still has the abovementioned good paint properties (and/or low ozone-forming potential).

According to the present invention, this object is achieved by using an azeotrope-forming mixture of one or more lactates and one or more volatile organic solvents as the solvent for the coating composition.

Despite the fact that the composition contains fewer volatile substances, a reversible coating composition having good paint properties and, in particular, a good and rapid drying can be obtained as a result of using such an azeotrope-forming mixture as solvent.

The lactates used do not damage the ozone layer and as a result are also more environmentally acceptable than the usual volatile organic solvents.

Furthermore, the lactates used are biologically degradable and less toxic than the aromatic solvents hitherto used. (The lactate preferably used, (L)-(n-butyl lactate), is even permitted for use in food products).

As a result, said lactates present fewer problems with respect to safety and handling than the usual aromatic solvents. The reversible coating compositions containing an azeotrope-forming lactate mixture according to the invention as solvent also do not present any stability problems during storage, such as gel formation and/or reaction with the tin.

The invention therefore relates to the use of lactates in the preparation of reversible coating compositions containing a volatile organic solvent, wherein the lactate forms an azeotrope with the volatile organic solvent.

The lactates used according to the invention are preferably alkyl esters of L(+)-lactic acid containing 1 - 10 carbon atoms in the alkyl group. Preferably, these are lactates having more than 3 carbon atoms in the alkyl group.

Of said lactates, lactates containing 4 - 6 carbon atoms, such as 1-methylpropyl and 2-methylpropyl lactate, n-butyl lactate, 1- and 2- and 3-methylbutyl lactate, n-pentyl lactate and n-hexyl lactate, as well as the various isomers thereof are preferable from the point of view of a good and rapid drying.

The lactate most preferably used is n-butyl L-(+)-lactate, which is marketed, inter alia, by the Purac company under the trade name Purasolv BL(R). This lactate has a vapour pressure at 20°C of approximately 10 Pa.

Mixtures of a plurality of lactates are, of course, possible.

The vapour pressure can be determined mathematically by means of the Clausius-Clapeyron formula from the extrapolation of the boiling-point curves of the liquids. The vapour pressure at 20°C can also be determined in a simple way by comparing the relative evaporation at 20°C of the liquid with liquids having a known vapour pressure, for example butyl glycol acetate (theoretical vapour pressure 0.2 - 0.3 Pa at 20°C) and ethylhexanol (theoretical vapour pressure 0.05 - 0.1 Pa at 20°C). The lactates of the invention preferably evaporate at a rate which is between that of butyl glycol acetate and ethylhexanol at 20°C. Thus, butyl lactate has a relative evaporation of 100, compared with butyl glycol acetate 131 and ethylhexanol 50 (determined with 10 ml of liquid in open petri dishes).

For the purposes of the present invention, the volatile organic solvent is defined as a solvent having a vapour pressure of more than 0.133 mbar or 13.3 Pa (0.1 mmHg) at 20°C. Said volatile organic solvent may be any organic solvent or mixture of solvents which is acceptable from a painting point of view and which forms an azeotrope with the lactate used.

These include the usual organic solvents for reversible paints, such as volatile aromatic solvents (toluene and xylene, and commercially available mixtures, such as Shellsol A, Solvesso 100), and volatile oxygenated solvents, such as esters and ketones (acetone, ethyl acetate and the like), or combinations of said solvents with one another or with other organic solvents, ternary systems possibly being obtained.

Of these solvents, the volatile aromatic solvents, and in particular xylene, toluene and Shellsol A, are particularly preferred.

The volumetric ratio of the lactate and the volatile organic solvent in the solvent mixture is such that an azeotropic mixture is obtained.

Said volumetric ratio is generally between 95/5 and 30/70, preferably between approximately 80/20 and 40/60. Thus, for the mixture of butyl lactate and Shellsol A, ratios of 80/20, 60/40 and 50/50 give good results.

Example 1 describes a simple preliminary test which makes it possible to determine whether, and in what ratio, a mixture of one or more lactates and one or more volatile organic solvents forms an azeotrope.

Mixtures or ratios of lactates and organic solvents which do not form an azeotropic mixture are unsuitable as solvent and therefore do not form part of the invention.

The solvent mixtures containing lactates are used in the same way and in the same quantities as the usual volatile organic solvents.

Said quantities are known per se and are generally between 20 and 70% by weight, preferably 30 - 50% by weight of the total composition.

The azeotrope-forming solvent mixtures according to the invention can be used in all reversible coating compositions, and such coating compositions are generally known to those skilled in the art. Examples are, inter alia, physically drying paints, i.e. paints which dry as a result, for example, of evaporation of the solvent without the occurrence of chemical drying reactions, such as acceleration.

However, the coating composition preferably comprises a chlorinated rubber paint, and more preferably, a "high-build" chlorinated rubber paint.

It is surprising, in particular for chlorinated rubber paints and high-build chlorinated rubber paints, that the lactate-containing solvent mixtures according to the invention give such good painting results in the ratios and quantities used in view of the fact that the lactates contain a free hydroxyl group and therefore belong to the hydroxylic solvents.

As was stated above, in the specialist field of chlorinated rubber paints, it was hitherto observed that monohydric and polyhydric alcohols and other hydroxylic solvents, such as diacetone alcohol and ethylene glycol, generally give poor painting results with chlorinated rubber paints, with the result that the more toxic and more environmentally unacceptable aromatic solvents have hitherto been used.

Furthermore, the comparative tests described below have revealed that the constituents of chlorinated rubber paints do not dissolve, or dissolve poorly, in pure methyl lactate or ethyl lactate.

The constituents of a chlorinated rubber paint do dissolve well in mixtures of, for example, methyl lactate and butyl lactate (60/40), but the coating compositions prepared with this mixture show separation and extreme fissure formation during drying.

In addition, the coating compositions containing only lactates without a further volatile organic solvent exhibit a sometimes violent reaction with the tin, with the result that these compositions are unstable during storage.

Despite all this, if the azeotrope-forming lactate-containing solvent mixtures according to the invention are used, surprisingly chlorinated rubber paints are obtained which are comparable, as regards their paint properties, with chlorinated rubber paint compositions comprising the usual volatile organic solvents.

The lactate-containing solvents have even proved suitable, in particular, for use as solvent in the so-called "high-build" chlorinated rubber paints, it having been found that the lactate-containing azeotropes in some cases even provide a better wetting of the substrate than the known aromatic solvents.

Another important use of the lactate-containing solvents are the physically drying reversible acrylate paints (non-water-based), which are known to those skilled in the art. These reversible non-water-based acrylate paints are notable for their very good paint properties, especially adhesion, on weak substrates. Nitrocellulose-containing paints can also be made up with the lactate-containing solvent mixtures of the invention.

The present invention therefore relates also to reversible coating compositions which contain as solvent an azeotrope-forming mixture of one or more lactates, as described above, and one or more organic solvents, as described above.

Said reversible coating composition, which may be a finishing paint or a priming paint, preferably comprises a chlorinated rubber paint and, in particular, a "high-build" chlorinated rubber paint.

In this connection, the chlorinated rubber may be any natural or synthetic chlorinated rubber polymer known per se which is generally used as binder in chlorinated rubber paints, and such chlorinated rubber polymers are generally known to those skilled in the art.

As an example, mention may be made of chlorinated natural rubbers, chlorinated synthetic polyisoprene, Pergut® S-5, S-10, S-20, S-40 (Bayer) and other chlorinated polymers, such as chlorinated polyethene, polypropene, and polybutene (Bayprene, Neoprene).

The chlorine content of these polymers is generally between 60 and 70% and the molecular weight is generally approximately 30,000 - 200,000. The "high-build" chlorinated rubber paints preferably contain the less viscous low-molecular-weight chlorinated rubbers, such as Pergut® S-5 and Pergut® S-10 (Bayer).

The chlorinated rubber paint furthermore contains one or more plasticizers, without which brittle top layers are obtained. Such plasticizers are generally known to those skilled in the art. Examples are chlorinated paraffins (Hordaflex, Hoechst; Cereclor, ICI).

In addition to the solvent, the chlorinated rubber and the plasticizers, the coating composition may furthermore contain all the usual inert constituents, such as inert fillers, additives, extenders and pigments.

Such substances are generally known to those skilled in the art and do not have to be discussed further.

As pigments for priming paint, mention may be made of rust-preventing pigments, such as zinc phosphate. For finishing paints, the usual oxides of titanium, iron and chromium, as well as micaceous iron ore and organic pigments can be used.

The chlorinated rubber paint furthermore preferably also contains one or more thickening agents for regulating the rheological properties and/or providing structural viscosity, as a result of which a "high-build" chlorinated rubber paint is obtained which can be applied with a thickness of the wet paint layer of more than 100 micrometres.

Said thickening agents, which are also referred to as filling binders, are known per se in the specialist field and do not have to be discussed further.

As examples, mention may be made of modified and hydrogenated castor-oil derivatives, such as Thixatrol ST and GST, and amine-modified clay types, such as Bentone 34.

The solvent mixture, the chlorinated rubber, the plasticizers and the further additions are used in the conventional quantities, and the High Build coatings may have a high solids content.

By way of example, the composition of a chlorinated rubber priming paint and finishing paint are given in Table I:

**Table I**

| Constituent | Finishing paint (% by weight) | Priming paint (% by weight) |
|---|---|---|
| Solvent | 30-50 | 30-50 |
| Chlorinated rubber/plasticizer | 20-35 | 20-35 |
| Filling binder | 1-10 | 1-10 |
| Pigments | 1-10 | 1-10 |
| Rust-preventing pigments | 0- 5 | 10-25 |
| Fillers | 30-35 | 15-25 |
| Additives | 0- 5 | 0- 5 |

The chlorinated rubber paint may also comprise a chlorinated-rubber combination varnish in which the chlorinated rubber is combined with another binder, such as an alkyd resin, an acrylic resin or bitumen, and these combination varnishes are also generally known in the specialist field.

The reversible coating compositions are prepared by the methods which are usual in the specialist field, and the procedures and devices used in this connection are known per se and do not have to be discussed in greater detail.

In the case of a chlorinated rubber paint, the binder (the chlorinated rubber), the plasticizers and the optional thickening agents are dissolved in the solvent at a temperature of not more than 50°C, after which the optional fillers, pigments, additives and further constituents are added and the constituents are mixed. In this operation, the devices which are usual in the specialist field can be used, such as dissolvers and other mixing devices.

In the case of High Build chlorinated rubber paints, the thickening agent is then allowed to swell for a few days, after which the rheological properties of the composition are adjusted in the desired way by adding further additives and a further quantity of the same or another solvent.

Although the lactate-containing solvent mixtures can be used in the preparation of the coating compositions analogously to the usual volatile organic solvents, it is preferable in the case of chlorinated rubber paints and, in particular, in the case of High Build chlorinated rubber paints, for the constituents of the paint first to be dissolved/suspended in a quantity of the volatile organic solvent, after which the lactate, optionally in combination with a further quantity of volatile organic solvent, is then added. The best painting results are obtained in this way.

A further aspect of the invention relates to the use of a lactate-containing reversible coating composition in coating substrates or products, and also to the coated substrates and products obtained in this way.

The coating can be carried out in any desired way known per se, such as brushing, dipping or spraying.

The High Build chlorinated rubber paints obtained according to the invention are particularly suitable for airless coating.

Possible substrates are, inter alia, electricity pylons and concrete (swimming pools and the like).

The invention will now be explained in greater detail by reference to the examples below. In these examples, unless otherwise stated, the ratios in the solvent mixture are always stated in percentage by volume.

In Example 1, a simple preliminary test is described which makes it possible to determine whether, and in what ratio, a combination of a lactate and a volatile organic solvent forms an azeotrope, with the result that said mixture is suitable for use as solvent in reversible coating compositions.

Examples 2 and 3 are comparative examples in which the lactate-containing solvent mixtures according to the invention are qualitatively compared with other solvents in chlorinated rubber paints.

Example 4 provides a possible composition of a chlorinated rubber paint which contains the lactate-containing solvent mixture according to the invention.

In Example 5, the paint properties of a chlorinated rubber paint of the invention containing butyl lactate are compared in a practical test with known coating compositions.

Variations on these examples will be clear to those skilled in the art and fall within the scope of the present claims. In particular, the invention is not limited to the chlorinated rubber paints described in the examples.

### Example 1

With this test it is possible to determine in a simple way whether, and, if so, in what ratio a lactate and a volatile organic solvent form an azeotrope. 25 ml of mixtures of a volatile organic solvent and a lactate are introduced in various ratios into 50 ml measuring cylinders and placed at room temperature in a fume cupboard under extraction.

The pure volatile organic solvent and the pure lactate are used as reference.

After approximately five days, the liquid levels left are determined, and from this it is possible to deduce whether, and in what ratios, a solvent mixture forms an azeotrope.

The results for a number of different solvents are stated in Table II. The values in the table show the volumes of the solvent mixtures left in the measuring cylinders after five days for various ratios of the lactate to the organic solvent.

The lactate was L(+)-(butyl lactate) in all cases.

**Table II**

| Butyl lactate/vol. org. solvent ratio (v/v) | | | | | | | |
|---|---|---|---|---|---|---|---|
| Vol. org. solvent | 100/0 | 80/20 | 60/40 | 50/50 | 40/60 | 20/80 | 0/100 |
| Shellsol A | 24 | 23 | 21 | 17 | 21 | 18 | 14 |
| Xylene | | 24 | 19 | 15.5 | 17 | 17 | 16.515 |
| Toluene | | 25 | 21.5 | 19 | 16 | 17 | 5 8 |
| Acetone | | 25 | 20 | 18 | 13 | 16 | 12.514 |
| Benzene | | 25 | 21.5 | 20 | 17 | 15 | 14 7 |
| Methyl lactate | | 24.5 | 23.5 | 23 | 22 | 21.5 | 20 19 |

As is evident from the results, Shellsol A, xylene, toluene and acetone form an azeotrope with butyl lactate. These azeotropic solvent mixtures are therefore suitable for use in the present invention. However, this test only says something about the azeotrope-forming capability of a solvent combination according to the present invention.

### Example 2

In this example, a number of solvents are qualitatively compared for use as solvent in a chlorinated rubber paint. In this connection, the solubility of the constituents and the stability in the tin (gas formation) were examined.

The composition of the paint, in litres, was as follows:

**Table III**

| | |
|---|---|
| Solvent | 250 |
| Chlorinated rubber/plasticizer combination | 495 |
| Thickening agent | 10 |
| Solvent | 245 |

These constituents were poured into a dissolver, ground and dissolved to form as clear as possible a transparent chlorinated rubber paint. The solvents used were NMP, methyl alcohol, DBE, Purac ML, Purac EL and Purac BL, as well as Purac ML/BL 50/50 and an azeotrope-forming mixture of Purac BL and Shellsol A according to the invention (50/50). Shellsol A was used as reference.

The DBE, Purac ML and Purac EL dissolved the constituents of the paint poorly to moderately, while NMP, Purac BL and methyl alcohol resulted in reaction with the tin and gas formation.

The constituents of the paint did dissolve well in a mixture of Purac ML/BL, the azeotrope-forming mixture of Purac BL and Shellsol A, and in the reference.

### Example 3

The lactate-containing solvents were used for the preparation of micaceous iron oxide finishing paint and a zinc phosphate priming paint.

The paint properties of the coating compositions obtained in this way were compared with the properties of coatings in which only butyl lactate (paint A), a 50/50 mixture of butyl lactate and methyl lactate (paint B), and Shellsol A (reference), respectively, were used as solvent.

The compositions of the paints, in litres, are stated in Table IV.

**Table IV**

| | Micaceous iron-oxide finishing paint | Zinc phosphate priming paint |
|---|---|---|
| Solvent I | 250 | 250 |
| Chlorinated rubber/plasticizer combination | 440 | 425 |
| Thickening agent | 13 | 15 |
| Fillers | 500 | 400 |
| Pigments | 75 | 100 |
| Additives | 20 | 1 |
| Solvent II | 232 | 209 |

The paints were prepared by dissolving the plasticizer, the binder and the thickener in the first quantity of solvent. After all the constituents had been dissolved, the fillers, pigments and other additives were added, after which the mixture was ground in a dissolver to form as clear a chlorinated rubber paint as possible.

Solvent II was then added at a temperature of approximately 50°C after which the paint was cooled for a number of days to swell the thickening agent.

After approximately three days, the rheology of the paint was adjusted with a further quantity of additives and solvent II.

In this case, the solvents I and II were as follows:

| | **Solvent I** | **Solvent II** |
|---|---|---|
| Invention | Shellsol A (50) | Butyl lactate (50) |
| Paint A | Butyl lactate | Butyl lactate |
| Paint B | Butyl lactate (50) | Methyl lactate (50) |
| Reference | Shellsol A | Shellsol A |

These four paints were then applied to a substrate, after which their paint properties were compared with the reference.
- Paint A (butyl lactate only) reacted with the tin. In addition, the top layer applied was still not dry after one day.
- In the case of paint B, the methyl lactate was quickly driven out of the paint, in which process separation occurred. This produced a hard upper layer on the top layer, with a wet layer of paint underneath it, from which the butyl lactate only evaporated slowly. The final dried top layer exhibited many cracks and fissures.
- The paint according to the invention dried only a fraction more slowly than the paint containing Shellsol A (the reference).

In this case, the penetration into the old paint layer was better than the reference, partly because the paint according to the invention resulted in a better wetting of the substrate.

### Example 4

A micaceous iron oxide finishing paint and a zinc phosphate priming paint were prepared using the lactate-containing solvent mixtures according to the invention in the way described in Example 3. Said finishing paint and priming paint had the composition stated in Table IV. The solids content of the finishing paint was 69 - 89% by weight (48 - 68% by volume) and that of the priming paint was 65 - 86% by weight (46 - 66% by volume).

The viscosity (ICI cone and plate at 25°C), the drying time and the elasticity after drying were then determined. The results are stated in Table V:

**Table V**

| | Finishing paint | Priming paint |
|---|---|---|
| Viscosity in dPa·s (Poise) (ICI "cone and plate") at 25°C | 7-8 | 7-8 |
| Elasticity after 72 hours at 40°C and 5 hours at 80°C | > 5 mm Erichson | > 5 mm Erichson |
| Drying time at 20°C relative humidity 65% | | |
| dust-dry | approx. 3 hours | approx. 3 hours |
| dry | approx. 6 hours | approx. 6 hours |
| paintable hours | approx. 72 hours | approx. 72 |

As is evident from the above, coating compositions having good paint properties are obtained with the lactate-containing solvent mixtures.

### Example 5

A reversible chlorinated rubber paint of the invention containing butyl lactate was compared in a laboratory test and in a practical test with a number of coating compositions from the prior art (Nos. 1 - 5) which have been investigated and assessed as part of the KWS 2000 project, and also with a chlorinated rubber from the prior art not containing lactate. In this investigation, which was carried out by the VOM Advice Centre, the coating compositions were first investigated in a laboratory test, after which those coating compositions which passed the laboratory test were applied to electricity pylons. In this connection, two types of substrate were used, viz. thermal zinc or old chlorinated rubber layers. The paint properties on chlorinated rubber layers already present provide a measure of the reversibility of the coating compositions, i.e. the fusion with the paint layers already present. The coatings applied were assessed on the basis of the following factors: processing, air bubbles, layer thickness, runs and separation, and liquid pattern and dry pattern.

The results of the practical test are shown in Table VI.

**Table VI**

| DESCRIPTION | | LABORATORY TEST | PRACTICAL APPLICATION TEST |
|---|---|---|---|
| PAINT TYPE ACC. TO INVENTION | CHLORINATED RUBBER | PASSES | EXCELLENT |
| UNIDECK CR PRIMER UNIDECK CR-VG (Bichemie) | CHLORINATED RUBBER from the prior art | PASSES | GOOD |
| 1 | HIGH SOLID EPOXY | FAILS | N.A. |
| 2 | EPOXY + HS POLYURETHANE | FAILS | N.A. |
| 3 | WATER-BASED | PASSES | GOOD |
| 4 | EPOXY + WATER-BASED | FAILS | N.A. |
| 5 | HIGH SOLID EPOXY | PASSES | GOOD |

| | | | |
|---|---|---|---|
| [N.A. = not applicable] | | | |

From the practical test it is evident that the lactate-containing chlorinated rubber coating of the invention has, surprisingly, better paint properties than the coating compositions from the prior art.

## Claims

1. Use of lactates in the preparation of reversible coating compositions which contain volatile organic solvents and have a low VOS emission and/or low ozone-forming potential, wherein the lactate compound forms an azeotrope with the volatile organic solvent.

2. Use according to Claim 1, wherein the lactate compound is an alkyl ester of L-(+)-lactic acid containing 1 - 10, preferably 4 - 6 carbon atoms in the alkyl group, and is most preferably L(+)-(n-butyl lactate).

3. Use according to Claim 1 or 2, wherein the volumetric ratio of the lactate and the volatile organic solvent is between 95/5 and 30/70, preferably 80/20 and 40/60.

4. Use according to one of Claims 1 - 3, wherein the volatile organic solvent is a volatile aromatic solvent, preferably toluene, xylene or "Shellsol A".

5. Use according to one of Claims 1 - 4, wherein the coating composition comprises a chlorinated rubber paint, preferably a "High Build" chlorinated rubber paint.

6. Reversible coating composition which contains volatile organic solvents and has a low VOS emission and/or low ozone-forming potential, wherein the composition furthermore comprises a lactate compound which forms an azeotrope with the volatile organic solvent.

7. Composition according to Claim 6, wherein the lactate compound is an alkyl ester of L(+)-lactic acid containing 1 - 10, preferably 4 - 6 carbon atoms in the alkyl group, and most preferably, L(+)-(n-butyl lactate).

8. Composition according to Claim 6 or 7, wherein the volumetric ratio of the lactate and the volatile organic solvent is between 95/5 and 30/70, preferably 80/20 and 40/60.

9. Composition according to one of Claims 6 - 8, wherein the volatile organic solvent is a volatile aromatic solvent, preferably toluene, xylene or "Shellsol A".

10. Composition according to one of Claims 6 - 10, wherein the coating composition comprises a chlorinated rubber paint, preferably a "High Build" chlorinated rubber paint.

11. Use of a coating composition according to one of Claims 6 - 11 in coating a substrate or product.

12. Substrate or product coated with a coating composition according to one of Claims 6 - 11.

13. Azeotrope-forming mixture of one or more volatile organic solvents and one or more lactate compounds, for use in the preparation of reversible coating compositions, preferably chlorinated rubber paints, and more preferably High Build chlorinated rubber paints, having a low VOS emission.

## Patentansprüche

1. Verwendung von Lactaten bei der Herstellung von reversiblen Beschichtungsmassen, die flüchtige organische Lösungsmittel enthalten und eine niedere VOS-Emission (VOS = flüchtige organische Substanzen) und/oder ein geringes Ozonbildungspotential aufweisen, wobei die Lactatverbindung ein Azeotrop mit dem flüchtigen organischen Lösungsmittel bildet.

2. Verwendung nach Anspruch 1, wobei es sich bei der Lactatverbindung um einen Alkylester von L-(+)-Milchsäure mit 1-10 und vorzugsweise 4-6 Kohlenstoffatomen in der Alkylgruppe und insbesondere um L(+)-(n-Butyllactat) handelt.

3. Verfahren nach Anspruch 1 oder 2, wobei das Volumenverhältnis des Lactats zum flüchtigen organischen Lösungsmittel 95/5 bis 30/70 und vorzugsweise 80/20 bis 40/60 beträgt.

4. Verwendung nach einem der Ansprüche 1 bis 3, wobei es sich beim flüchtigen organischen Lösungsmittel um ein flüchtiges aromatisches Lösungsmittel und vorzugsweise um Toluol, Xylol oder "Shellsol A" handelt.

5. Verwendung nach einem der Ansprüche 1 bis 4, wobei die Beschichtungsmasse ein chloriertes Kautschukanstrichmittel und vorzugsweise ein chloriertes "High Build"-Kautschukanstrichmittel ist.

6. Reversible Beschichtungsmasse, die flüchtige organische Lösungsmittel enthält und eine niedere VOS-Emission und/oder ein geringes Ozonbildungspotential aufweist, wobei die Masse ferner eine Lactatverbindung enthält, die ein Azeotrop mit dem flüchtigen organischen Lösungsmittel bildet.

7. Masse nach Anspruch 6, wobei es sich bei der Lactatverbindung um einen Alkylester von L(+)-Milchsäure mit einem Gehalt an 1-10 und vorzugsweise 4-6 Kohlenstoffatomen in der Alkylgruppe und insbesondere um L(+ )- (n-Butyllactat) handelt.

8. Masse nach Anspruch 6 oder 7, wobei das Volumenverhältnis des Lactats und des flüchtigen organischen Lösungsmittels 95/5 bis 30/70 und vorzugsweise 80/20 bis 40/60 beträgt.

9. Masse nach einem der Ansprüche 6 bis 8, wobei es sich beim flüchtigen organischen Lösungsmittel um ein flüchtiges aromatisches Lösungsmittel und vorzugsweise um Toluol, Xylol oder "Shellsol A" handelt.

10. Zusammensetzung nach einem der Ansprüche 6 bis 10, wobei die Überzugsmasse ein chloriertes Kautschukanstrichmittel und vorzugsweise ein "High Build"-chloriertes Anstrichmittel ist.

11. Verwendung einer Beschichtungsmasse nach einem der Ansprüche 6-11 bei der Beschichtung eines Substrats oder Produkts.

12. Substrat oder Produkt, beschichtet mit einer Beschichtungsmasse nach einem der Ansprüche 6-11.

13. Ein Azeotrop bildendes Gemisch von einem oder mehreren flüchtigen organischen Lösungsmitteln und einer oder mehreren Lactatverbindungen zur Verwendung bei der Herstellung von reversiblen Beschichtungsmassen, vorzugsweise chlorierten Kautschukanstrichmitteln und insbesondere von chlorierten "High Build"-Kautschukanstrichmitteln mit einer niederen VOS-Emission.

## Revendications

1. Utilisation de lactates dans la préparation de compositions de revêtement réversibles qui contiennent des solvants organiques volatils et ont une faible émission de VOS et/ou un faible potentiel de formation d'ozone, caractérisée en ce que le composé lactate forme un azéotrope avec le solvant organique volatil.

2. Utilisation selon la revendication 1, dans laquelle le composé lactate est un ester alkylique de l'acide L (+)-lactique contenant 1-10, de préférence 4-6 atomes de carbone dans le groupe alkyle, et est le plus préférablement le L(+)-(lactate de n-butyle).

3. Utilisation selon la revendication 1 ou 2, dans laquelle le rapport volumétrique entre le lactate et le solvant organique volatil est compris entre 95/5 et 30/70, de préférence 80/20 et 40/60.

4. Utilisation selon l'une des revendications 1-3, dans laquelle le solvant organique volatil est un solvant aromatique volatil, de préférence le toluène, le xylène ou le "Sellsol A".

5. Utilisation selon l'une des revendications 1-4, dans laquelle la composition de revêtement est une peinture au caoutchouc chloré, de préférence une peinture au caoutchouc chloré "High Build".

6. Composition de revêtement réversible qui contient des solvants organiques volatils et a une faible émission de VOS et/ou un faible potentiel de formation d'ozone caractérisée en ce qu'elle comprend en outre un composé lactate qui forme un azéotrope avec le solvent organique volatile.

7. Composition selon la revendication 6, dans laquelle le composé lactate est un ester alkylique de l'acide L (+)-lactique contenant 1-10, de préférence 4-6 atomes de carbone dans le groupe alkyle, et est le plus préféablement le L(+)-(lactate de n-butyle)

8. Composition selon la revendication 6 ou 7, dans laquelle le rapport volumétrique entre le lactate et le solvant organique volatil est compris entre 95/5 et 30/70, de préférence 80/20 et 40/60.

9. Composition selon l'une des revendications 6-8, dans laquelle le solvant organique volatil est un solvant aromatique volatil, de préférence le toluène, le xylène ou le "Shellsol A".

10. Composition selon l'une des revendications 6-10, caractérisée en ce qu'elle est une peinture au caoutchouc chloré, de préférence une peinture au caoutchouc chloré "High Build".

11. Utilisation d'une composition de revêtement selon l'une des revendications 6-11 dans le revêtement d'un substrat ou d'un produit.

12. Substrat ou produit revêtu avec une composition de revêtement selon l'une des revendications 6-11.

13. Mélange formant un azéotrope d'un ou de plusieurs solvants organiques volatils et d'un ou de plusieurs composés lactate, pour une utilisation dans la préparation de compositions de revêtement réversibles, de préférence de peintures au caoutchouc chloré, et plus préférablement de peintures au caoutchouc chloré High Build, ayant une faible émission de VOS.
